**Europäisches Patentamt**

**European Patent Office**

**Office européen des brevets**

(19)

(11) Veröffentlichungsnummer: **0 105 959**
**B1**

(12) # EUROPÄISCHE PATENTSCHRIFT

(45) Veröffentlichungstag der Patentschrift:
**14.01.87**

(21) Anmeldenummer: **82109501.5**

(22) Anmeldetag: **14.10.82**

(51) Int. Cl.⁴: **F 02 M 21/02**

(54) **Zwischen Gastank und Vergaser angeordneter Verdampfer.**

(43) Veröffentlichungstag der Anmeldung:
**25.04.84 Patentblatt 84/17**

(45) Bekanntmachung des Hinweises auf die Patenterteilung:
**14.01.87 Patentblatt 87/3**

(84) Benannte Vertragsstaaten:
**AT BE CH DE FR GB IT LI LU NL SE**

(56) Entgegenhaltungen:
**WO-A-82/02926**
**BE-A-510 341**
**DE-B-1 120 210**
**DE-C-818 593**
**FR-A-2 243 341**
**GB-A-226 502**
**US-A-2 775 981**
**US-A-2 777 432**

(73) Patentinhaber: **Reiter, Heinz- Albert, Weiherweg 32,
D-6589 Achtelsbach (DE)**

(72) Erfinder: **Reiter, Heinz- Albert, Weiherweg 32,
D-6589 Achtelsbach (DE)**

(74) Vertreter: **Schönherr, Wolfgang, Patentanwälte
Wolfgang Schönherr Dipl.- Ing. Karl- Heinz
Serwe Hawstrasse 28, D-5500 Trier (DE)**

LIBER, STOCKHOLM 1987

## Beschreibung

Die Erfindung betrifft einen zwischen Gastank und Vergaser angeordneten Verdampfer, vorzugsweise für Kraftfahrzeuge, mit zwei Gehäusekammern für die erste und zweite Druckreduzierstufe, die jeweils eine Membranwand und ein Gaseinströmventil aufweisen, wobei die jeweilige Ventilklappe der Gaseinströmventile durch die Druckänderung an der Membranwand und eine vorgespannte Feder steuerbat ist, und mit einem nachgeordneten Gasmischer, wobei an den von der Gaszufuhr in die Gehäusekammern abgewandten Unterdruckseiten der jeweiligen Membran eine Unterdruckverbindungsleitung angeschlossen ist, die mit einem Auslaß des Vergasers nahe seiner Drosselklappe verbunden ist.

Bei einer bekannten membrangesteuerten Druckregelvorrichtung zur Speisung der Ansaugleitung von Brennkraftmaschinen mit Flüssiggas, insbesondere für Kraftfahrzeuge (DE-B-1 120 210) weist die Niederdrucksteuereinrichtung eine zusätzliche Membran auf und die Kammer zwischen den beiden Membranen steht mit dem Teil der Ansaugleitung vor dem Lufttrichter in Verbindung, während jenseits der zusätzlichen Membran der Atmosphärendruck wirksam ist. Dabei sind beide Membranen derart miteinander verbunden, daß eine Abnahme des absoluten Druckes in der Kammer eine Zunahme der das Niederdruckventil im Öffnungssinne verstellenden Kraft bewirkt.

Wie die praktische Erfahrung gezeigt hat, hat die bekannte Vorrichtung zunächst den Nachteil, daß die erste Reduzierstufe nicht direkt vom Gasdruck beaufschlagt wird, sondern daß vielmehr Flüssiggas eingespritzt wird, wodurch keine genaue Steuerung möglich ist, da sich bei der Nachverdampfung des Flüssiggases eine Volumenänderung einstellt.

Die bekannte Vorrichtung hat ferner den Nachteil, daß insbesondere beim Start Schwierigkeiten der Regulierung der Gaszufuhr eintreten und es daher weitestgehend von der Geschicklichkeit des Fahrers abhängt, wie weit es gelingt, die richtige Einstellung zu erreichen.

Aufgabe der Erfindung ist es daher, einen Verdampfer mit nachgeordnetem Gasmischer zu schaffen, bei dem sich die Gaszufuhr auf Grund der Drehgeschwindigkeit und Ansaugstärke des Motors selbsttätig und genau regelt.

Zur Lösung dieser Aufgabe ist ein Verdampfer der eingangs genannten Art dadurch gekennzeichnet, daß die Gehäusekammer für die zweite Druckreduzierstufe durch eine Trennplatte mit verstellbarer Durchtrittsöffnung unterteilt ist, wobei an den der Trennplatte gegenüberliegenden Seiten der Gehäusekammer je eine Membran angeordnet ist, daß beide durch die Trennplatte unterteilten Gehäusekammerteile je einen Auslaß mit Anschlußleitung zum Gasmischer aufweisen, daß in der Gehäusekammer ein längsverschiebbarer Stift angeordnet ist, der die Trennplatte durchragt und mit beiden Membranen sowie einem Ventilhebel für die Ventilklappe des Gaseinströmventils zusammenwirkt, und daß die Gehäusekammer an der gasunbeaufschlagten Seite der Membran des Gehäusekammerteils, der vom Gaseinströmventil durch die Trennplatte abgeteilt ist, einen Anschluß für eine Staudruckleitung aufweist, die mit einer Staudüse verbunden ist.

Vorteilhaft ist an der Staudüse eine verstellbare Entlastungsstellschraube angeordnet.

Nach einer bevorzugten Ausführungsform ist am Verdampfergehäuse eine Membrandose mit einer Membran und einer Feder angeordnet, die an der von der Feder abgewandten Membranseite eine Öffnung zur Außenatmosphäre und ein Verbindungsrohr mit einem Verschlußventil zur Gehäusekammer der zweiten Druckreduzierstufe hat und an der federzugewandten Membranseite einen Anschluß zur Unterdruckverbindungsleitung zum Vergaser aufweist.

Vorteilhaft ist dabei das Verschlußventil hülsenartig ausgebildet und mit einer Steuerstange innerhalb des zur Gehäusekammer der zweiten Druckreduzierstufe führenden Verbindungsrohres verbunden, wobei die Steuerstange eine Schließklappe aufweist, die mit der Durchtrittsöffnung in der Trennplatte der Gehäusekammer für die zweite Druckreduzierstufe zusammenwirkt.

Nach einer besonderen Ausführungsform weist der Gasmischer eine Mischdüse mit einer Ringkammer mit Austrittsschlitz auf, in die die Anschlußleitungen der Gehäusekammer der zweiten Druckreduzierstufe einmünden, ist im Abstand zur Ringkammer, dem Austrittsschlitz gegenüberliegend, ein Ablenkblech angeordnet und weist die Ringkammer an ihrer dem Ablenkblech zugewandten Seite in Verlängerung der Außenwandung des Austrittsschlitzes eine gegen das Ablenkblech gerichtete Ablenknase auf.

Es ist zwar bekannt (FR-A-2 243 341), einen Mischer vorzusehen, der aus einer ringförmigen Venturidüse besteht. Dieser Mischer hat jedoch den Nachteil, daß er nach den Gesetzen einer Venturidüse verhältnismäßig große Abmessungen aufweisen muß und jeweils typenbezogen entwickelt werden muß. Der Gasmischer nach der Erfindung dagegen ist bei kleiner Abmessung auf differenzierte Motorleistungen einstellbar.

Vorteilhaft weist der Gasmischer eine Ringkammer mit dreieckförmigem Querschnitt, nach innen gerichtetem, an der zum Ringkammerinneren weisenden Dreiecksspitze angeordneten Überstromschlitz und nach außen weisenden Anschlußöffnungen für mit der Gehäusekammer der zweiten Druckreduzierstufe verbundene Anschlußleitung auf und es ist im Abstand zur Ringkammer ein in dem von der Ringkammer umgebenden Innenraum längs verschiebbarer, konischer Drehkörper zur Veränderung der Durchgangsöffnung des Innenraumes angeordnet.

Bei einem bekannten Gasmischer mit Ringkammer (BE-A-510 341) jedoch ist eine stufenlose Anpassung für unterschiedliche Motorleistungen nicht in befriedigender Weise möglich.

Nach einer weiteren vorteilhaften Ausführungsform mit einer Einspritzanlage ist zwischen Gehäusekammer für die zweite Druckreduzierstufe und Einspritzanlage des Motors eine Vormischdüse mit in einem Hülsenkopf verschiebbarem Stellkonus angeordnet und ein der Vormischdüse nachgeordnetes, motorseitig angeschlossenes Sammelrohr mit einer Luftzufuhr vom Vergaser unterhalb der Drosselklappe verbunden.

Bei einer bekannten Vormischdüse (GB-A-226 502) wird durch einen Kompressor Luft in einen Trichter geblasen, der aus einer Kammer Gas mitreißt und mischt. Demgegenüber ist die erfindungsgemäße Vormischdüse unter der Drosselklappe angeordnet und es wird atmosphärische Luft angesaugt.

Die Erfindung ist in den Zeichnungen beispielhaft dargestellt. Es zeigen:

Fig. 1 einen Verdampfer mit Gasmischer und Vergaser im Längsschnitt bei geöffnetem Ventil der ersten Druckreduzierstufe, also außer Funktion und ohne Gasbeaufschlagung,

Fig. 2 die Anlage nach Fig. 1 bei stillstehendem Motor unter Gasbeaufschlagung,

Fig. 3 die Anlage nach Fig. 1 bei angelassenem Motor mit geschlossener Drosselklappe,

Fig. 4 die Anlage nach Fig. 1 mit am Verdampfergehäuse angeordneter Membrandose zum verstellbaren Druckausgleich,

Fig. 5 die Anlage nach Fig. 4 in einer weiteren Ausführungsform,

Fig. 6 eine Staudüse mit verstellbarer Entlastungsschraube,

Fig. 7 eine verstellbare Mischdüse,

Fig. 8 eine verstellbare Mischdüse in anderer Ausführungsform,

Fig. 9 eine Meßdüse für die Anlage nach Fig. 5.

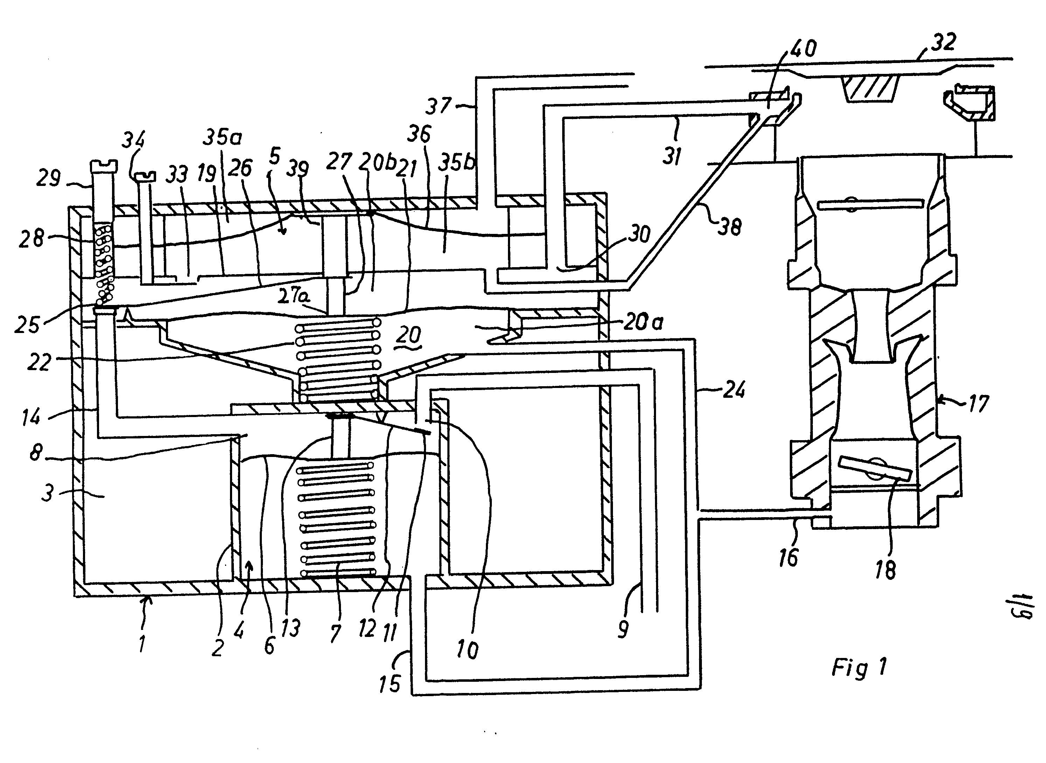

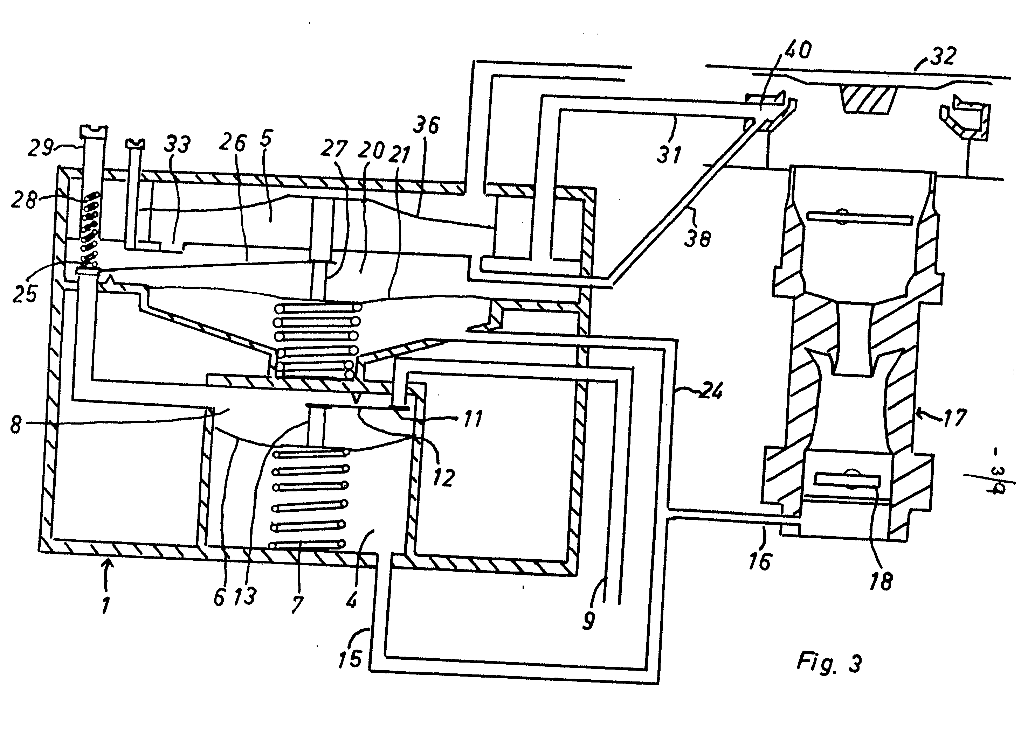

Der Verdampfer nach Fig. 1 bis 3 hat ein Gehäuse 1, das mehrere durch feste Begrenzungswände 2 getrennte Gehäusekammern 3, 4 und 5 umschließt.

Die Gehäusekammer 3, die als Ringkammer ausgebildet ist, dient dem Wärmeaustausch und ist mit einem nicht gezeigten Wasserumlauf verbunden.

In der Gehäusekammer 4 ist eine Membran 6 angeordnet, die unter Druck einer Feder 7 steht. Durch die Membran 6 wird innerhalb der Gehäusekammer 4 ein Gassammelraum 8 der ersten Druckreduzierstufe gebildet. Dieser Gassammelraum 8 ist mit einer vom Flüssiggastank kommenden Gasleitung 9 verbunden, wobei das Flüssiggas durch die Kammeröffnung 10 in den Gassammelraum 8 einströmen kann. Im Gassammelraum 8 ist ferner ein Gaseinströmventil 11 angeordnet, das an einem Ventilhebel 12 sitzt, der mit einem beweglichen Stift 13 verbunden ist. Der bewegliche Stift 13 stützt sich auf der federabgewandten Seite der Membran 6 ab.

Vom Gassammelraum 8 geht ein Gasverbindungskanal 14 zur Gehäusekammer 5.

An der von der Gaszufuhr in die Gehäusekammer 4 abgewandten Unterdruckseite der Membran 6 ist eine Unterdruckverbindungsleitung 15 angeschlossen, die zu einem Unterdruckanschluß 16 eines Vergasers 17 nahe seiner Drosselklappe 18 führt.

Die Gehäusekammer 5 dient der zweiten Druckreduzierstufe und weist eine Trennplatte 19 auf. Der durch die Trennplatte 19 gebildete Gehäusekammerteil 20, weist eine Membran 21 auf, die unter Druck einer Feder 22 steht. Durch die Membran 21 ist der Gehäusekammerteil 20 in einem Raum 20a, der durch eine Unterdruckverbindungsleitung 24 ebenfalls mit dem Unterdruckanschluß 16 des Vergasers 17 verbunden ist, und einen Gasraum 20b, in den der Gasverbindungskanal 14 einmündet, unterteilt.

Die Einlaßöffnung des Gasverbindungskanals 14 ist durch ein gaseinströmventil 25 verschließbar, wobei das Gaseinströmventil 25 an einem Ventilhebel 26 sitzt, der mit einem längsverschiebbaren Stift 27, dessen Ende 27a sich auf der Membran 21 abstützt, verbunden ist.

Das Gaseinströmventil 25 ist ferner über eine Feder 28 durch eine Stellschraube 29 einstellbar.

Der Gasraum 20b hat einen Auslaß 30, von dem eine Anschlußleitung 31 zu einem Gasmischer 32 führt.

Die Trennplatte 19 hat eine Durchtrittsöffnung 33, die durch eine Stellschraube 34 veränderbar ist.

In dem durch die Trennplatte 19 vom Gehäusekammerteil 20 abgetrennten Gehäusekammerteil 35 ist eine weitere Membran 36 angeordnet. Die Membran 36 teilt den Gehäusekammerteil 35 in einen von der Trennplatte abgewandten Raum 35a mit einem Anschluß für eine Staudruckleitung 37, die zu einer nicht gezeigten Staudruckdüse führt, und einen der trennplatte 19 zugewandte Gasraum 35b, der einen Anschluß für eine Anschlußleitung 38, die zu einer Mischkammer 40 führt, hat. In diesen Gasraum 35b ragt das Ende 39 des längsverschiebbaren Stiftes 27, das mit der Membran 36 verbunden ist und ebenfalls mit dem Ventilhebel 26 zusammenwirkt.

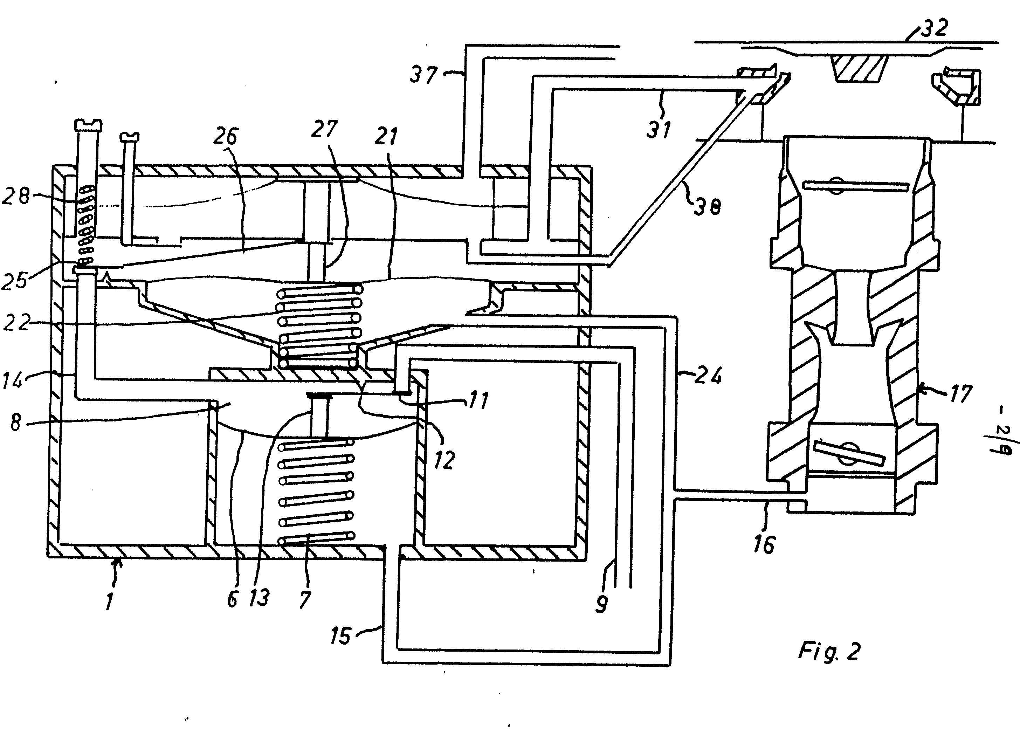

Während Fig. 1 den Verdampfer außer Funktion und ohne Gasbeaufschlagung zeigt, erreicht bei der Stellung nach Fig. 2 das Flüssiggas über die Leitung 9 den Gassammelraum 8, wobei der Tankvordruck je nach Füllzustand und Außentemperatur etwa zwischen 2,6 und 17 bar liegt. Dieser Vordruck drückt auf die Membran 6, die durch die Feder 7 derart vorgespannt ist, daß bei Erreichen eines Druckes von etwa 1,4 bar der Stift 13 den Ventilhebel 12 so bewegt, daß das Gaseinströmventil 11 sich schließt und die Gaszufuhr gestoppt wird. Der erreichte Vordruck gelangt über den gasverbindungskanal 14 zum Gasventil 25. Dieses ist durch die Feder 28 so vorbelastet, daß kein Gas entweichen kann. Durch die Feder 22, die über die Membran 21 auf den Stift 27 drückt, wird der Ventilhebel 26 in der das Ventil schließenden Stellung gehalten, wodurch ein sicherer Verschluß des Gaseinströmventils 25 bei stillstehendem Motor gewährleistet ist.

Wird der Motor bei geschlossener Drosselklappe angelassen, entsteht ein minimaler Unterdruck, der über den Unterdruckanschluß 16 und die Unterdruckverbindungsleitungen 15 bzw. 24 sowohl in die Gehäusekammer 4 als auch in die Gehäusekammer 5 gelangt. Dabei wirkt dieser Unterdruck auf die Membran 21 ein, in dem er die Vorspannung der Feder 22 aufhebt. Das führt je nach Drehgeschwindigkeit und Ansaugstärke des Motors zu einer Entlastung des Stiftes 27 und damit über den Ventilhebel 26 zum Gaseinströmventil 25. Durch Betätigen der Stellschraube 29 wird das Gaseinströmventil 25 so lange geöffnet, bis bei drehendem Motor so viel Gas strömt, daß trotz schwacher Saugwirkung dem Motor Gas in einer solchen Menge zugeführt wird, daß die Zündung möglich ist. Sobald der Motor läuft, wird der Unterdruck so stark, daß die Feder 22 bis zur größtmöglichen Stellung durch die Membran 21 zurückgezogen wird.

Die relativ starke Feder 7 in der Gehäusekammer 4 wird ebenfalls durch den über die Unterdruckverbindungsleitung 15 vom Vergaser 17 kommenden Unterdruck über die Membran 6 derart entlastet, daß der Druck im Gassammelraum 8 abfällt.

Mit Hilfe der Stellschraube 29 und der Feder 28 läßt sich der Gasstrom derart regeln, daß der Motor aus dem Gasraum 20b über die Anschlußleitung 31 und den Gasmischer 32 ohne Ansaugwirkung so versorgt wird, daß er im Leerlauf störungsfrei läuft, wobei der Gaszufluß für jeden Motor individuell entsprechend seiner Hubraumgröße optimal eingestellt werden kann.

Die Federn 7 und 22 sowie die Membran 6 sind so bemessen, daß bei optimaler Leerlaufeinstellung gute Starteigenschaften gegeben sind.

Steigt durch höhere Drehzahl der Unterdruck unterhalb der Drosselklappe 18 des Vergasers 17, so fällt der Gasdruck in dem Gassammelraum 8. Dies führt zu einem schwächeren Gemisch mit Drehzahlabfall. Somit können geringste Drehzahlschwankungen ohne mechanisch bewegbare Teile direkt übertragen werden.

Beim Öffnen der Drosselklappe 18 fällt der Unterdruck und dementsprechend steigt der Vordruck in dem Gassammelraum 8. Dadurch wird Gas in größerer Menge über die Anschlußleitung 31 dem Gasmischer 32 zugeführt. Dies bewirkt einen Unterdruck in der Mischerkammer 40, wodurch mit steigender Strömungsgeschwindigkeit dem Vergaser die entsprechende Gasmenge zugeführt wird. Überschreitet jedoch die Gasmenge die Ansaugleistung des Gasmischers, wird die Membran 36 über die verstellbare Durchtrittsöffnung 33 so beaufschlagt, daß das Gaseinströmventil 25 über den Stift 27 und Ventilhebel 26 geschlossen bzw. der Gasdurchfluß reduziert wird.

Zur Beschleunigung des Ansaugvorganges ist der gasraum 35b über die Unterdruckanschlußleitung 38 mit dem Gasmischer verbunden. Mierdurch wird erreicht, daß das in dem Gasraum 20b bereitgestellte Gas die Wirkung der Membran 36 erst bei Druckausgleich in der Mischkammer 40 des Gasmischers 32 annulliert.

Solange beim Kaltstart die Kaltstartklappe geschlossen ist, bleibt trotz geöffneter Drosselklappe 18 der Unterdruck relativ hoch. Dadurch bleibt der Gasdruck in dem Gasraum 20b bis zur Erwärmung des Motors und bis zum Öffnen der Drosselklappe relativ gering. So wird eine Volleistung des Motors vor seiner Erwärmung vermieden.

Beim Schließen der Drosselklappe 18 entsteht sofort je nach Durchströmungsgeschwindigkeit ein starker Unterdruck, der höher ist als in der Leerlaufstellung. Dadurch wird der Druck im Gassammelraum 8 so lange und so stark vermindert, bis der Schubeffekt beendet ist. Wenn durch Kraftabnahme wieder Gas benötigt wird, sei es durch Öffnen der Drosselklappe oder bei Steigen der geforderten Motorleistung, steigt der Druck unterhalb der Drosselklappe und somit der Druck in dem Gassammelraum 8.

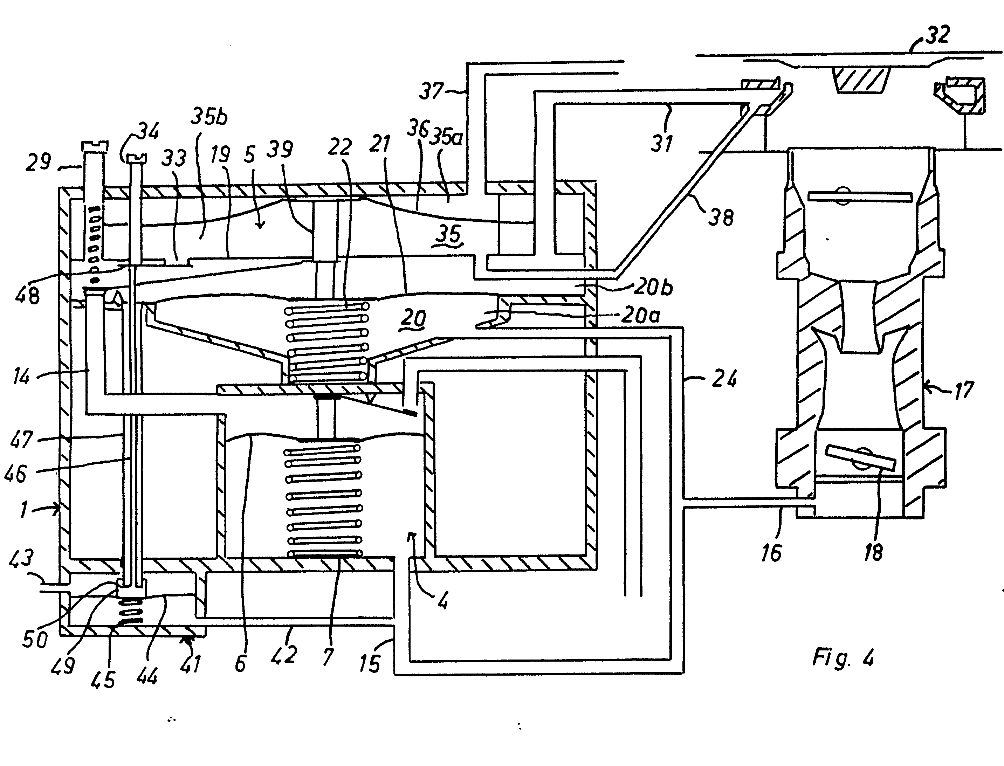

Bei der Ausführungsform nach Fig. 4 ist an der Unterseite des Verdampfergehäuses 1 eine Membrandose 41 angeordnet. Die Membrandose 41 ist über eine Zuleitung 42 mit der Unterdruckverbindungsleitung 15, die die Gehäusekammer 4 mit dem Unterdruckanschluß 16 des Vergasers 17 verbindet, verbunden. Ferner weist die Membrandose 41 einen Anschluß für eine Leitung 43 auf, an die ein nicht gezeigter Schlauch bis zur Fahrzeugunterseite anschließbar ist, so daß die Membrandose mit dem atmosphärischen Außendruck verbunden ist.

In der Membrandose 41 ist eine Membran 44 angeordnet, die unter Druck einer Feder 45 steht und den an die Leitung 42 angeschlossenen Raum von dem an die Leitung 43 angeschlossenen Raum trennt.

Auf der Membran 41 stützt sich an der von der Feder 45 abgewandten Membranseite eine Steuerstange 46 ab, die in einem Verbindungsrohr 47 verschiebbar angeordnet ist . Das von der Membran 44 abgewandte Ende der Steuerstange 46 ist mit einer Schließklappe 48 verbunden, die mit der Durchtrittsöffnung 33 der Trennplatte 19 in der Gehäusekammer 5 zusammenwirkt. Der obere Anschlag der Schließklappe 48 ist durch die Stellschraube 34 einstellbar.

Die Steuerstange 46 ist mit einem hülsenartigen Verschlußventil 49 verbunden, das das offene Ende 50 des Verbindungsrohres 47 übergreift.

Bei stehendem Motor drückt die Feder 45 das Verschlußventil 49 fest gegen das Ende 50 des Verbindungsrohres 47. Die Steuerstange 46 überträgt die Endstellung auf die Schließklappe 48, um nach Stellung des oberen Anschlages durch die Stellschraube 34 vollständig zu schließen oder je nach den Motorerfordernissen ein Restspalt offen zu halten.

Wenn der Motor gestartet ist, wird der unter der Drosselklappe vorhandene Unterdruck über den Unterdruckanschluß 16, die Unterdruckverbindungsleitung 15 und die Leitung 42 der federzugewandten Seite der Membran 44 in der Membrandose 41 zugeführt. Hierdurch wird die Feder 45 so belastet, daß das Verschlußventil 49 mit der Steuerstange 46 die Schließplatte 48 öffnet. Die Feder 45 ist dabei so gewählt, daß die Hülse des Verschlußventils 49 am Ende 50 des Verbindungsrohres 47 keinen Luftdurchlaß ermöglicht.

Wird die Drosselklappe 18 des Vergasers 17 geöffnet, steigt der Druck unter der Drosselklappe und durch die Verbindungsleitungen 16, 15 und 42 auf der federzugewandten Seite der Membran 44. Die Vorspannung der Feder 45 wird dadurch annulliert und die Schließklappe 48 schließt bzw. reduziert die Durchtrittsöffnung 33 der Trennplatte 19. Somit unterstützt diese Vorrichtung die Steuerfunktion der Membran 36 der zweiten Druckreduzierstufe.

Beim Schließen der Drosselklappe ist die Wirkungsweise umgekehrt. Im Schubbereich steigt der Druck unter der Drosselklappe höher als in der Leerlaufstellung. Durch die Membran 44 wird die Feder 45 so stark zusammengedrückt und gespannt, daß zwischen dem Verschlußventil und dem Verbindungsrohr 47 ein öffnungsspalt entsteht. Die Schließklappe 48 wird weiter geöffnet und, da das Verbindungsrohr 47 am tiefsten Punkt des Gehäusekammerteils 20 des Verdampfers angeordnet ist, fließt in dieser Stellung das beim Verdampfervorgang von Flüssiggas abgesonderte öl durch die Leitung 43 ab.

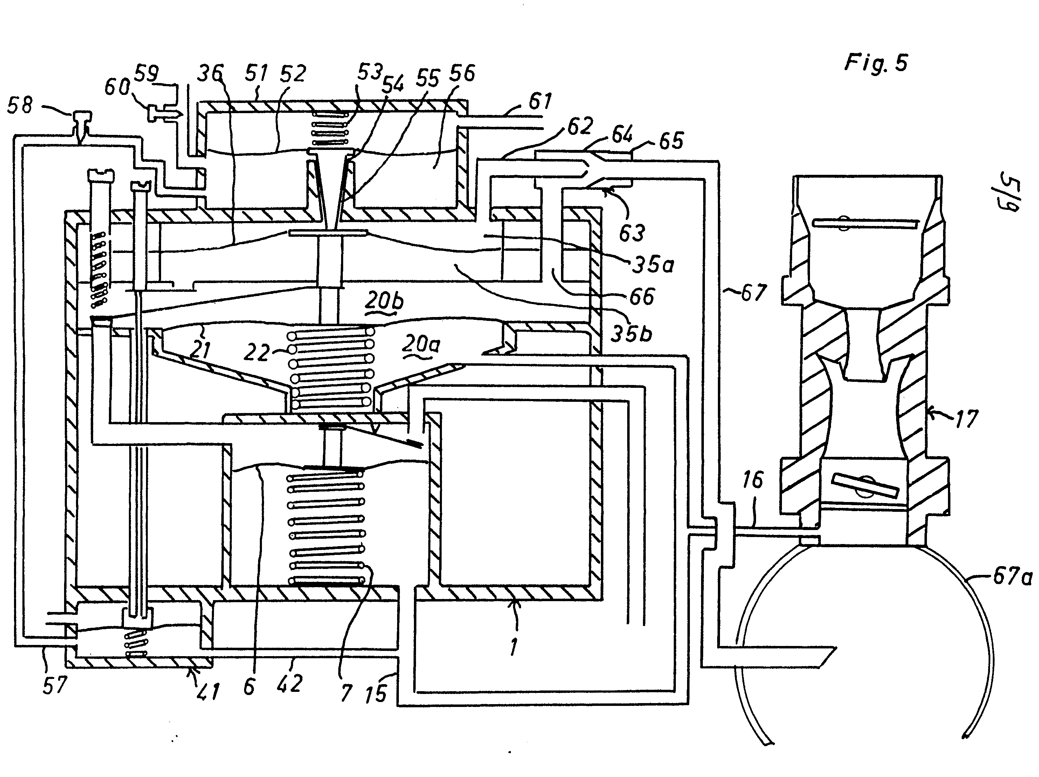

Bei der Ausführungsform nach Fig. 5 ist am Verdampfergehäuse 1 eine weitere Membrandose 51 derart angeordnet, daß sie zentrisch über der Gehäusekammer 5 der zweiten Druckreduzierstufe angebracht ist. In der Membrandose 51 ist eine Membran 52 angeordnet, die unter Druck einer Feder 53 steht. Auf der von der Feder 53 abgewandten Seite der Membran 52 stützt sich ein kegelförmiger Ventilkörper 54 ab, der in einer Durchtrittsöffnung 55 sitzt, die zur Gehäusekammer 5 führt. Das von der Membran 52 abgewandte Ende des Kegelventils 54 stützt sich gegen die Membran 36 in der Gehäusekammer 5 ab.

Der mit der Gehäusekammer 5 über die Durchtrittsöffnung 55 verbundene Raum 56 der Membrandose 51 ist über eine Unterdruckbypassleitung 57 mit dem Raum der Membrandose 41 verbunden, der über die Leitung 42 mit dem Unterdruckanschluß 16 des Vergasers 17 in Verbindung steht. Eine Stellschraube 58 ist in der Unterdruckbypassleitung 57 vorgesehen, um den Durchlaß regulieren zu können. Eine weitere Staudruckleitung 59 verbindet den Raum 56 der Membrandose 51 mit einer nicht gezeigten Staudruckkammer. Eine Stellschraube 60, die in der Staudruckleitung 59 vorgesehen ist, dient ebenfalls zur Regulierung des Durchlasses.

Der Raum der Membrandose 51, in dem die Feder 53 angeordnet ist, ist über eine Zuleitung 61 mit einer nicht gezeigten Unterdruckkammer einer Meßdüse verbunden.

Bei einer Ausführungsform geht vom Gehäusekammerteil 35 der Gehäusekammer 5 ein Verbindungsrohr 62 zu einer Vormischdüse 63. Diese Vormischdüse 63 weist einen Hülsenkörper 64 mit verschiebbarem Stellkonus 65 auf. In die Vormischdüse 63 mündet eine weitere Zuleitung 66, die vom gasraum 20b der Gehäusekammer 5 kommt. Über eine Leitung 67 ist Die Vormischdüse 63 mit einem Sammelrohr 67a verbunden, das zum Motor führt. Das Sammelrohr 67a erhält vom Vergaser 17 eine zusätzliche Luftzufuhr.

Beim Startvorgang ds Motors wirkt sich der entstehende Gasdruck auf die verschiedenen Membranen des Verdampfers in der oben beschriebenen Weise aus. Der kegelförmige Ventilkörper 54 stützt sich durch die schwache Feder 53 über die Membran 36 auf das Ende 39 des längsverschiebbaren Stift 27 ab, wodurch in der Durchtrittsöffnung 55 ein schwacher Restspalt entsteht. Beim Drehen des Motors annulliert der entstehende leichte Unterdruck die Vorspannung der Feder 22 in der Gehäusekammer 5.

Da die Leitung 67 unter der Drosselklappe 18 am Vergaser angeschlossen ist, wird der relativ hohe Unterdruck über die Vormischdüse 63 über die Leitungen 62 und 66 an beide Seiten der Membran 36 der zweiten Druckreduzierstufe geleitet. Durch den Restspalt am Ventilkörper 54 der Membrandose 51 wirkt dieser Druck auch auf die Membran 52. Dabei wird die Ansaugwirkung durch die Bypassleitung 57 so unterstützt, daß trotz der Frischluftöffnung über die Staudruckleitung 59 so viel Unterdruck erzeugt wird, daß das Kegelventil 54 sich derart bewegt, daß ein für den Leerlauf erforderlicher Gaszufluß erfolgt. Durch die Mengenbegrenzungsstellschraube 58 kann die der Motorcharakteristik entsprechende Gasmenge stufenlos eingestellt werden.

Beim öffnen der Drosselklappe 18 steigt der Druck unter der Drosselklappe an und somit steigt auch der Vordruck im Gasraum 20b, wobei die Vorspannung der Feder 22 ohne Einwirkung durch die Membran 36 überwunden wird und das Gas in erforderlicher Menge über die Zuleitung 66 durch die Vormischdüse 63 die Leitung 67 und von dort den Motor erreichen kann.

Bei steigender Drehzahl fällt der Druck unter der Drosselklappe. Die Größenordnung des Druckes ist jedoch ohne Auswirkung, da der Druck durch die Vormischdüse 63 gleicherweise an die beiden Seiten der Membran 36 geleitet wird und sich somit in seiner Wirkung ausgleicht. Die jetzt angesaugte Luft geht durch die Meßdüse, wobei der in dieser Düse entstehende Unterdruck durch die Zuleitung 61 auf die Membrandose 51 übertragen wird. Der entstehende Staudruck wird durch die Zuleitung 59 in den Raum 56 der Membrandose 51 gebracht. Durch die kombinierte Wirkung wird die Spannung der Feder 53 überwunden und das Kegelventil 54 geöffnet. Die nunmehr in den Gehäusekammerteil 35 mit Staudruck einströmende Luft bewirkt einen Druckanstieg. Dieser überträgt sich durch das Verbindungsrohr 62 auf die Vormischdüse 63. Das Gleichgewicht über und unter der Membran 36 wird nun entsprechend des Luftdurchsatzes geändert. Durch Einstellen des verschiebbaren Stellkonus 65 der Vormischdüse 63 und der Stellschraube 60 in der Staudruckleitung 59 kann der Verdampfer stufenlos eingestellt werden.

Beim Schließen der Drosselklappe wird die Gasflußreduzierung dadurch noch verstärkt, daß der Unterdruck über die Bypassleitung 57 einwirkt.

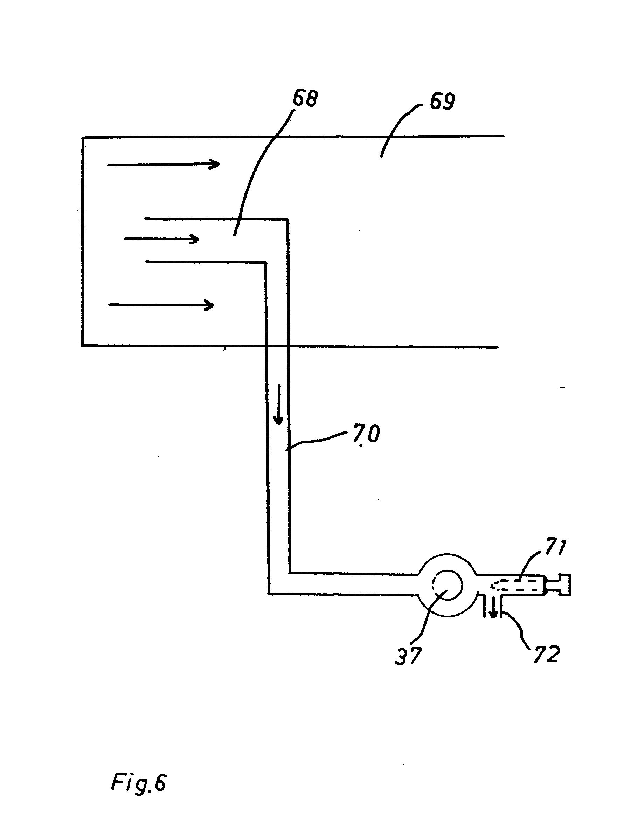

Die durch die Staudruckleitung 37 mit der Gehäusekammer 5 verbundene Staudruckdüse nach Fig. 6 besteht aus einem Staurohr 68, das im Inneren einer Luftzuleitung 69 zum nicht gezeigten Luftfilter angeordnet ist. Das Staurohr 68 ist über eine Leitung 70 an die Staudruckleitung 37 angeschlossen, wobei mit Hilfe einer Entlastungsstellschraube 71 eine Entlastungsöffnung 72 veränderbar und auf die speziellen Strömungsverhältnisse der unterschiedlichen Motore und Fahrzeuge einstellbar ist.

Bei aerodynamisch hochentwickelten Mischgeräten über der Drosselklappe kann bei mittlerer bis hoher Geschwindigkeit beim Schließen der Drosselklappe durch die angestaute Luft ein leichter Überdruck entstehen. Dabei könnte die Gaszufuhr gesperrt werden und der Mischer kein Gas fördern, was zum Aussetzen des Motors führen würde. Mit Hilfe der Staudüse wird der Staudruck zur Unterstützung der Membran 36 ausgenützt. Hierdurch wird die Membran wetter- und ölunempfindlich, da ein unterschiedlicher Außenluftdruck ausgeglichen wird.

Die durch die Luftzuleitung 69 einströmende Luft erzeugt im Staurohr 68 einen Staudruck, der über die Leitungen 70 und 37 sich auf die Gehäusekammer 5 überträgt. Der Staudruck wirkt auf die Membran 36 unterstützend ein, wobei seine Intensität durch Betätigen der Entlastungsschraube 71 verstellbar ist. Wenn beim Schließen der Drosselklappe ein erhöhter Staudruck vom Mischer an die Membran 36 gelangt, dann wird dieser durch die Zuleitung 37 von der Staudüse an die Membran 36 ausgeglichen. Der Motor erhält dadurch so viel Gas, wie durch die Vorspannung der Feder 28 möglich ist. Der Motor setzt nicht aus und ist sofort wieder voll belastbar.

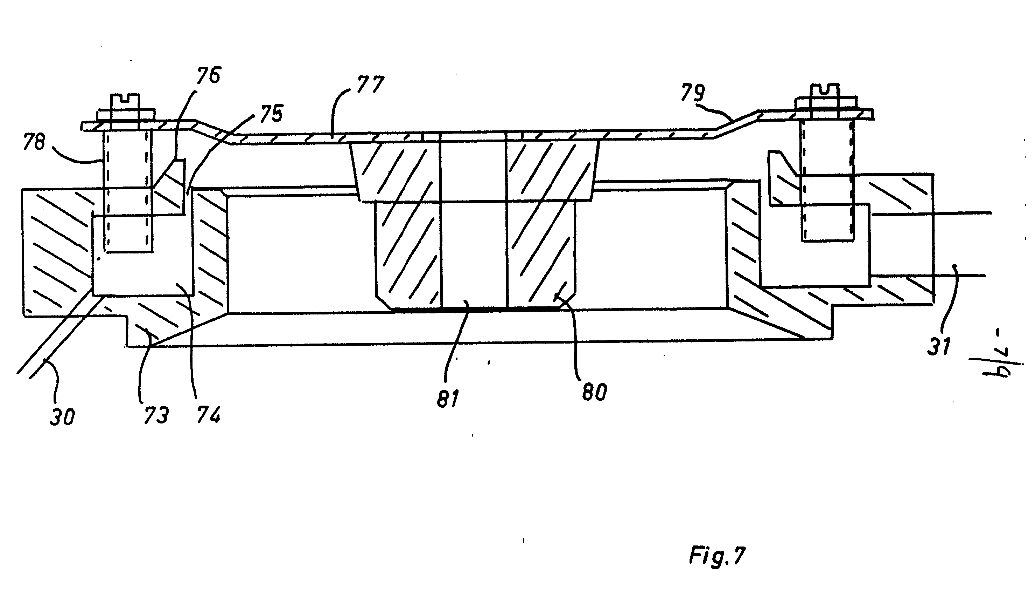

Der in Fig. 1 bis 4 dargestellte Gasmischer 32 weist nach Fig. 7 einen Ringkörper 73 mit einer inneren Sammelkammer 74 auf. Die Sammelkammer 74 ist über die Anschlußleitung 31 mit dem Gasraum 20b und über die Unterdruckleitung 38 mit dem Gehäusekammerteil 35 der Gehäusekammer 5 verbunden. Die Sammelkammer 74 hat einen Austrittsschlitz 75, dessen Außenwandung eine Ablenknase 76 aufweist.

Im Abstand zum Ringkörper 73 ist ein Ablenkblech 77 angeordnet, das durch Gewindestifte 78 im Abstand vom Austrittsschlitz 75 der Sammelkammer 74 gehalten ist. Das Ablenkblech 77 weist eine den Zwischenraum zwischen Ablenknase 76 und Ablenkbleck 77 verengende Stufe 79 auf.

In der Mitte des Ablenkbleches 77 ist ein Ablenkansatz 80 mit zentraler Mittelbohrung 81 angeordnet.

Die Ansaugluft strömt durch den swischen Ringkörper 73 und Ablenkblech 77 gebildeten kreisförmigen Lufteinlaß ein, wobei die Lufteinlaßöffnung durch die Gewindestifte 78 verstellbar ist. Dabei wird die vom Luftfilter kommende, relativ turbultente Luftströmung laminar ausgerichtet und trifft auf die Ablenknase 76. Durch die infolge Querschnittverengung erzeugte Beschleunigung entsteht ein Unterdruck, der durch den Windschatten hinte der Ablenknase 76 noch verstärkt wird. Dieser Unterdruck wird durch den Austrittsschlitz 75 auf die Sammelkammer 74 übertragen.

Bei hoher Strömungsgeschwindigkeit muß die Strömung in dem von Ringkörper umschlossenen Raum abgelenkt werden. Zur Beruhigung der bei dieser Ablenkung entstehenden Wirbel wird durch die kleine Zentralbohrung 81 eine Leitströmung eingelassen.

Somit werden durch diese Ausbildung des Mischers eine Umwandlung der turbulenten Strömung in eine relative Laminarströmung ohne Querschnittverkleinerung und ein starker Sog erzeugt. Bei Einspritzmotoren wird der Mischer vorteilhaft unmittelbar über der Stauscheibe angeordnet. Die vom Mischer zwischen Ringkörper und Ablenkblech durchfließende Luft wird gleichgerichtet auf die Stauscheibe gelenkt.

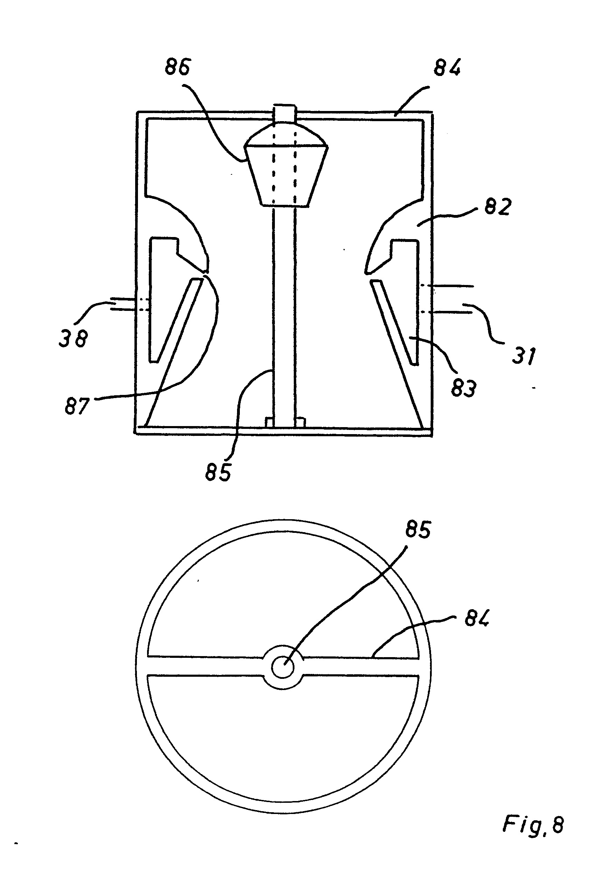

Die in Fig. 8 gezeigte Mischdüse hat einen Ringkörper 82 mit innerer Sammelkammer 83. In die Sammelkammer 83 münden die von der Gehäusekammer 5 kommenden Leitungen 31 und 38.

Der Ringkörper ist in einer Halterung 84 angeordnet. Diese Halterung 84 weist einen Gewindestift 85 auf, der einen konischen Drehkörper 86 trägt, wobei der Drehkörper 86 auf dem Gewindestift 85 höhenverstellbar angeordnet ist.

Die Sammelkammer 83 weist zum Drehkörper 86 hin einen Überströmschlitz 87 auf.

Die Mischdüse wird vorteilhaft in die Luftzuleitung zwischen Filter und Vergaser angeordnet. Die Luft strömt durch das Innere des Ringkörpers 82, dessen innere Oberfläche aerodynamisch so profiliert ist, daß die größte Luftbeschleunigung und somit die größte Saugleitung an der Stelle erreicht wird, an der die Profilfläche vom Überströmschlitz 87 unterbrochen ist. Der Überströmschlitz 87 ist so angeordnet, daß er eine Abreißkante hat, die einen Windschatten erzeugt. Das durch die Sogwirkung zuströmende Gas annulliert die Druckdifferenz und verhindert somit eine Wirbelbildung und einen erhöhten Luftwiderstand. Durch Verstellung des Drehkörpers 86 kann der Luftdurchgangsquerschnitt stufenlos eingestellt werden.

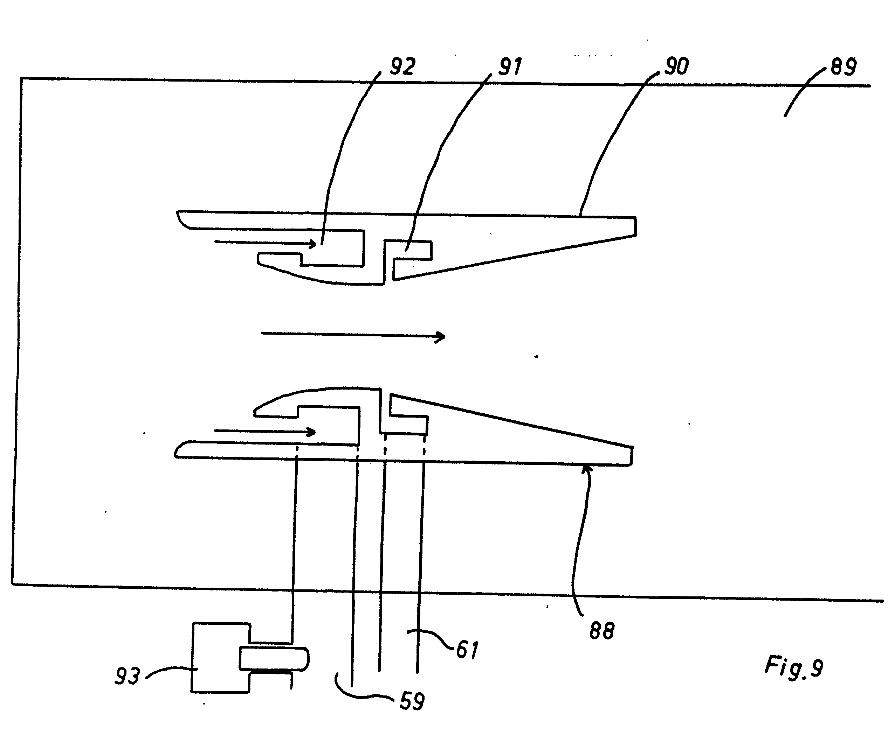

Bei der in Fig. 5 gezeigten Ausführungsform führt die Staudruckleitung 59 zu einer Staudruckkammer und die Zuleitung 61 zu einer Unterdruckkammer einer Meßdüse. In Fig. 9 ist eine kombinierte Meßdüse 88 mit Staudruckkammer gezeigt. Diese Meßdüse ist in einem Luftszuleitungsrohr 89 angeordnet. Sie hat einen Ringkörper 90 mit zwei inneren Sammelkammern 91 und 92. Die Sammelkammer 91 ist mit der Leitung 61 und die Sammelkammer 92 mit der Staudruckleitung 59 verbunden, wobei in dieser Leitung ein elektrisches Absperrventil 93 angeordnet ist. Durch öffnen des Elektroventils 93 beim Starten wird die Annullierung des Unterdrucks, der über die Leitung 67 nach Fig. 5 auf den Vormischer 63 übertragen wird, aufgehoben.

**Patentansprüche**

1. Zwischen Gastank und Vergaser (17) angeordneter Verdampfer (1), vorzugsweise für Kraftfahrzeuge, mit zwei Gehäusekammern (4, 5) für die erste und zweite Druckreduzierstufe, die jeweils eine Membranwand (6, 21) und ein Gaseinströmventil (11, 25) aufweisen, wobei die jeweilige Ventilklappe der Gaseinströmventile durch die Druckänderung an der Membranwand und eine vorgespannte Feder (7, 22) steuerbar ist, und mit einem nachgeordneten Gasmischer (32), wobei an den von der Gaszufuhr in die Gehäusekammern (4, 5) abgewandten Unterdruckseiten der jeweiligen Membran (6, 21) eine Unterdruckverbindungsleitung (15, 24) angeschlossen ist, die mit einem Auslaß (16) des Vergasers (17) nahe seiner Drosselklappe (18) verbunden ist, dadruch gekennzeichnet, daß die Gehäusekammer (5) für die zweite Druckreduzierstufe durch eine Trennplatte (19) mit verstellbarer Durchtrittsöffnung (33) unterteilt ist, wobei an den der Trennplatte gegenüberliegenden Seiten der Gehäusekammer je eine Membran (21, 36) angeordnet ist, daß beide durch die Trennplatte (19) unterteilten Gehäusekammerteile (20, 35) je einen Auslaß (30) mit Anschlußleitung (31, 38) zum Gasmischer (32 bzw. 63) aufweisen, daß in der Gehäusekammer (5) ein längsverschiebbarer Stift (27) angeordnet ist, der die Trennplatte (19) durchragt und mit beiden Membranen (21, 36) sowie einem Ventilhebel (26) für die Ventilklappe des Gaseinströmventils (25) zusammenwirkt und daß die Gehäusekammer (5) an der gasunbeaufschlagten Seite der Membran (36) des Gehäusekammerteils (35), der vom Gaseinströmventil (25) durch die Trennplatte (19) abgeteilt ist, einen Anschluß für eine Staudruckleitung (37 bzw. 59) aufweist, die mit einer Staudüse verbunden ist.

2. Verdampfer nach Anspruch 1, dadurch gekennzeichnet, daß an der Staudüse (68, 70) eine verstellbare Entlastungsstellschraube (71) angeordnet ist.

3. Verdampfer nach Anspruch 1, dadurch gekennzeichnet, daß am Verdampfergehäuse (1) eine Membrandose (41) mit einer Membran (44) und einer Feder (45) angeordnet ist, die an der von der Feder abgewandten Membranseite eine öffnung (43) zur Außenatmosphäre und ein Verbindungsrohr (47) mit einem Verschlußventil (49) zur Gehäusekammer (5) der zweiten Druckreduzierstufe hat und an der federzugewandten Membranseite einen Anschluß (42) zur Unterdruckverbindungsleitung (15) zum Vergaser (17) aufweist.

4. Verdampfer nach Anspruch 3, dadurch gekennzeichnet, daß das Verschlußventil (49) hülsenartig ausgebildet und mit einer Steuerstange (46) innerhalb des zur Gehäusekammer (5) der zweiten Druckreduzierstufe führenden Verbindungsrohres (47) verbunden ist, wobei die Steuerstange eine Schließklappe (48) aufweist, die mit der Durchtrittsöffnung (33) in der Trennplatte (19) der Gehäusekammer für die zweite Druckreduzierstufe zusammenwirkt.

5. Verdampfer nach Anspruch 1, dadurch gekennzeichnet, daß der Gasmischer (32) eine Mischdüse mit einer Ringkammer (74) mit Austrittsschlitz (75) aufweist, in die die Anschlußleitungen (31, 38) der Gehäusekammer (5) der zweiten Druckreduzierstufe einmünden, daß im Abstand zur Ringkammer, dem Austrittsschlitz gegenüberliegend, ein Ablenkblech (77) angeordnet ist, und daß die Ringkammer (74) an ihrer dem Ablenkblech (77) zugewandten Seite in Verlängerung der Außenwandung des Austrittsschlitzes (75) eine gegen das Ablenkblech gerichtete Ablenknase (76) aufweist.

6. Verdampfer nach dem Anspruch 5, dadurch gekennzeichnet, daß das Ablenkblech (77) eine gegen die Ablenknase (76) der Ringkammer (74) gerichtete, den Zwischenraum zwischen Ringkammer und Ablenkblech verengende Stufe (79) aufweist.

7. Verdampfer nach Anspruch 5, dadurch gekennzeichnet, daß das Ablenkblech (77) und die Ringkammer (74) durch Gewindestifte (78) miteinander verbunden sind, wobei der Abstand beider Teile veränderbar ist.

8. Verdampfer nach Anspruch 5, dadurch gekennzeichnet, daß am Ablenkblech (77) ein Ablenkansatz (80) angeordnet ist, der in den von der Ringkammer (74) umgebenen Innenraum ragt und eine das Ablenkblech und den Ablenkansatz durchdringende Mittelbohrung (81) aufweist.

9. Verdampfer nach Anspruch 1, dadurch gekennzeichnet, daß der Gasmischer eine Ringkammer (83) mit dreieckförmigem Querschnitt, nach innen gerichtetem, an der zum Ringkammerinneren weisenden Dreiecksspitze angeordneten Überströmschlitz (87) und nach außen weisenden Anschlußöffnungen für mit der Gehäusekammer (5) der zweiten Druckreduzierstufe verbundene Anschlußleitungen (31, 38) aufweist und daß im Abstand zur Ringkammer ein in dem von der Ringkammer umgebenden Innenraum längsverschiebbarer, konischer Drehkörper (86) zur Veränderung der Durchgangsöffnung des Innenraumes angeordnet ist.

10. Verdampfer nach einem der Ansprüche 1 bis 9, dadurch gekennzeichnet, daß am Verdampfergehäuse (1) eine Membrandose (51) angeordnet ist, deren Membran (52) mit einem kegelförmigen Ventilkörper (54) eines in einer Durchtrittsöffnung (55) zur Gehäusekammer (5) der zweiten Druckreduzierstufe angeordneten Ventils verbunden ist, wobei die Spitze des konischen Ventilkörpers mittig sich am Ende (39) des Verschiebbaren Stiftes (27) der zweiten Druckreduzierstufe abstützt, und der durch die Membran unterteilte Raum (56) einerseits über eine Staudruckleitung (59) mit einer Staudrucksammelkammer einer Meßdüse (88) und andererseits über eine Zuleitung (61) mit einer Unterdrucksammelkammer (91) der Meßdüse verbunden ist.

11. Verdampfer nach Anspruch 10, dadurch gekennzeichnet, daß der an die Staudruckleitung (59) angeschlossene Teil der Membrandose (51) über eine Unterdruckbypassleitung (57) mit der das Ventil für die Durchtrittsöffnung (33) der Trennplatte (19) steuernden Membrandose (41) verbunden ist.

12. Verdampfer nach Anspruch 10, dadurch gekennzeichnet, daß in der Staudruckleitung (59) eine Stellschraube (60) und ein elektrisches Absperrventil (93) angeordnet sind.

13. Verdampfer nach Anspruch 1 mit einer Einspritzanlage, dadurch gekennzeichnet, daß zwischen Gehäusekammer (5) für die zweite Druckreduzierstufe und Einspritzanlage des Motors eine Vormischdüse (63) mit in einen Hülsenkörper (64) verschiebbaren Stellkonus (65) angeordnet ist und ein der Vormischdüse nachgeordnetes, motorseitig angeschlossenes Sammelrohr (67a) mit einer Luftzufuhr vom Vergaser (17) unterhalb der Drosselklappe (18) verbunden ist.

## Claims

1. A vaporizer (1) arranged between gas tank and carburettor (17), preferably for motor vehicles, having two housing chambers (4, 5), for the first and second pressure reducing stage, which in each case have a diaphragm wall (6, 21) and a gas inlet valve (11, 25), in relation to which the respective valve flap of the gas inlet valves is controllable by the pressure change at the diaphragm wall and a biassed spring (7, 22), and having a subsequently-arranged gas mixer (32), in relation to which, connected at the underpressure sides averted from the gas supply into the housing chambers (4, 5), of the respective diaphragm (6, 21), is an underpressure connecting pipe (15, 24) which is connected to an outlet (16) of the carburettor (17) close to its throttle flap (18), characterised in that the housing chamber (5) for the second pressure reducing stage is subdivided by a separating plate (19) having an adjustable passage aperture (33), in which respect one diaphragm (21, 36) each is arranged at those sides of the housing chamber which lie opposite to the separating plate, in that the two housing chamber parts (20, 35) subdivided by the separating plate (19) each have an outlet (30) with a connecting pipa (31, 38) to the gas mixer (32 or 63 respectively), in that arranged in the housing chamber (5) is a longitudinally-displaceable pin (27) which projects through the separating plate (19) and co-operates with the two diaphragms (21, 36) as well as with a valve lever (26) for the valve flap of the gas inlet valve (25), and in that the housing chamber (5) at the side, not acted upon with gas, of the diaphragm (36) of the housing chamber part (35) which is divided off from the gas inlet valve (25) by the separating plate (19) has a connection for a dynamic pressurising pipe (37 or 59 respectively) which is connected to a dynamic nozzle.

2. A vaporizer according to claim 1, characterised in that an adjustable relief adjusting screw (71) is arranged on the dynamic nozzle (68, 70).

3. A vaporizer according to claim 1, characterised in that arranged on the vaporizer housing (1) is a diaphragm box (41) with a diaphragm (44) and a spring (45), which at the diaphragm side averted from the spring has an opening (43) to the outside atmosphere and a connecting tube (47) with a closure valve (49) for the housing chamber (5) of the second pressure reducing stage and at the spring-facing diaphragm side has a connection (42) for the underpressure connection pipe (15) to the carburettor (17).

4. A vaporizer according to claim 3, characterised in that the closure valve (49) is sleeve-like in design and is connected to a control rod (46) inside the connecting tube (47) leading to the housing chamber (5) of the second pressure reducing stage, in which respect the control rod has a closing flap (48) which co-operates with the passage aperture (33) in the separating plate (19) of the housing chamber for the second pressure reducing stage.

5. A vaporizer according to claim 1, characterised in that the gas mixer (32) has a mixing nozzle with an annular chamber (74) having outlet slot (75), into which chamber the connecting pipes (31, 38) of the housing chamber (5) of the second pressure reducing stage open, in that arranged at a spacing from the annular chamber, and lying opposite to the outlet slot, is a baffle plate (77), and in that the annular chamber at its side facing the baffle plate (77), in extension of the outer wall of the outlet slot (75), has a deflecting nose (76) which is directed towards the baffle plate.

6. A vaporizer according to claim 5, characterised in that the deflecting sheet (77) has a step (79) which is directed towards the deflecting nose (76) of the annular chamber (74) and which narrows the intermediate space between annular chamber and baffle plate.

7. A vaporizer according to claim 5, characterised in that the baffle plate (77) and the annular chamber (74) are connected together by threaded pins (78), in which respect the spacing of the two parts is variable.

8. A vaporizer according to claim 5, characterised in that arranged on the baffle plate (77) is a deflecting extension (8) which projects into the interior space surrounded by the annular chamber (74) and has a central bore (81) penetrating the baffle plate and the deflecting extension.

9. A vaporizer according to claim 1, characterised in that the gas mixer has an annular chamber (83) having triangular cross-section, an inwardly-directed overflow slot (87) arranged at the tip of the triangle pointing to the interior of the annular chamber and outwardly-pointing connection apertures for connecting pipes (31, 38) connected to the housing chamber (5) of the second pressure reducing stage, and in that arranged at a spacing from the annular chamber is a conical body of revolution (86), longitudinally displaceable in the interior space surrounded by the annular chamber, for the variation of the passage aperture of the interior space.

10. A vaporizer according to one of claims 1 to 9, characterised in that arranged on the vaporizer housing (1) is a diaphragm box (51), the diaphragm (52) of which is connected to a conical valve body (54) of a valve arranged in a passage aperture (55) for the housing chamber (5) of the second pressure reducing stage, in which respect the tip of the conical valve body is supported centrally on the end (39) of the displaceable pin (27) of the second pressure reducing stage, and the space (56) subdivided by the diaphragm is connected on the one hand by way of a dynamic-pressure pipe (59) to a dynamic-pressure collecting chamber of a metering nozzle (58) and on the other hand by way of a feed pipe (61) to an underpressure collecting chamber (91) of the measuring nozzle.

11. A vaporizer according to claim 10, characterised in that that part of the diaphragm box (51) which is connected to the cynamic-pressure pipe (59) is connected by way of an underpressure bypass pipe (57) to the diaphragm box (41) controlling the valve for the passage aperture (33) of the separating plate (19).

12. A vaporizer according to claim 10, characterised in that an adjusting screw (60) and an electrical shut-off valve (93) are arranged in the dynamic-pressure pipe (59).

13. A vaporizer according to claim 1 with an injection installation, characterised in that arranged between housing chamber (5) for the second pressure reducing stage and injection installation of the engine is a premixing nozzle (63) having an adjusting cone (65) displaceable into a sleeve body (64) and a collecting tube (67a) arranged subsequent to the premixing nozzle and at the engine side is connected to an air supply of the carburettor (17) underneath the throttle flap (18).

**Revendications**

1. Vaporisateur-régulateur disposé entre le réservoir à gaz combustible liquéfié et le carburateur (17), de préférence pous véhicules à moteur, comprenant un boîtier dans lequel sont formées deux chambres (4, 5) qui constituent les premier et second étages réducteurs de pression, ces chambres étant pourvues chacune d'une cloison constituée par une membrane (6, 21) ainsi que d'une soupape d'admission (11, 25) pour le gaz, chaque organe obturateur de ces soupapes d'admission pouvant être commandé en modifiant la pression exercée sur la membrane et par un ressort précontraint (7, 22), le dispositif comprenant en outre en aval un mélangeur de gaz (32), le côté dépression de chaque membrane (6, 21), opposé à l'arrivée du gaz dans les chambres (4, 5) du boîtier, étant relié à une conduite de liaison à dépression (15, 24), laquelle communique avec une sortie (16) du carburateur (17) à proximité du papillon d'étranglement (18), ce dispositif étant caractérisé par le fait que la chambre (5) du boîtier destinée à constituer le second étage réducteur de pression est divisée par une cloison (19) traversée par un passage (33), à section réglable, de manière qu'une membrane (21, 36) soit disposée sur chacun des côtés de la chambre du boîtier qui sont situés de part et d'autre de ladite cloison, que les parties (20, 35) de la chambre du boîtier qui sont séparées par la cloison (19) présentent chacune une sortie (30) raccordée à une conduite de liaison (31, 38) qui aboutit au mélangeur à gaz (32 ou 63), qu'il est prévu dans la chambre (5) du boîtier d'une part une tige axialement coulissante (27) qui traverse la cloison (19), ainsi que les deux membranes (21, 36) et d'autre part un levier de soupape (26) destiné à coopérer avec l'organe obturateur de la soupape d'admission du gaz (25), et enfin que la chambre (5) du boîtier, sur le côté de la membrane (36) frappé par le gaz d'admission dans la partie (35) de la chambre du boîtier, et qui est séparée de la soupape (25) d'admission du gaz par la cloison (19), présente un raccord pour une conduite sous pression dynamique (37 ou 59) qui aboutit à une tuyère à pression dynamique.

2. Vaporisateur-régulateur selon la Revendication 1, caractérisé par le fait qu'il est prévu une vis de réglage de la détente (71) sur ladite tuyère à pression dynamique (68, 70).

3. Vaporisateur-régulateur selon la Revendication 1, caractérisé par le fait que le boîtier (1) de l'appareil comprend une chambre à membrane (41) qui renferme une membrane (44) ainsi qu'un ressort (45), cette chambre comportant du côté de la membrane opposé au ressort une tubulure (43) qui débouche dans l'atmosphère extérieure ainsi qu'un tube de liaison (47) muni d'une soupape de fermeture (49), ce tube débouchant dans la chambre (5) du second étage réducteur de pression, tandis que du côté ressort de la membrane (44) il est prévu un autre raccord (42) pour une conduite de liaison en dépression (15) qui aboutit au carburateur (17).

4. Vaporisateur-régulateur selon la Revendication 3, caractérisé par le fait que la soupape de fermeture (49) est en forme de douille et que cette soupape est reliée à une tige de commande (46) logée à l'intérieur du tube de liaison (47) qui débouche dans la chambre (5) du boîtier où se trouve le second étage réducteur de pression, ladite tige de commande (46) comportant un clapet plat (48) propre à coopérer avec l'orifice (33) qui traverse la cloison (19) de la chambre du boîtier prévu pour réaliser le second étage réducteur de pression.

5. Vaporisateur-régulateur selon la Revendication 1, caractérisé par le fait que le mélangeur de gaz (32) se compose d'une tuyère de mélange dans laquelle est formée une chambre annulaire (74) pourvue d'une fente de sortie (75) et dans laquelle débouchent les conduites (31, 38) de liaison provenant de la chambre (5) du boîtier qui renferme le second étage réducteur de pression, qu'à une certaine distance de ladite chambre annulaire (74) il est prévu une tôle déflectrice (77) placée en regard de ladite fente de sortie (75), et que la chambre annulaire (74) présente, sur son côté orienté vers ladite tôle déflectrice (77) et dans le prolongement de la paroi externe de la fente de sortie (75) un talon déflecteur (76) orienté vers la tôle déflectrice.

6. Vaporisateur-régulateur selon la Revendication 5, caractérisé par le fait que la tôle déflectrice (77) comprend un épaulement ou gradin (79) orienté vers ledit talon déflecteur (76) de la chambre annulaire (74) afin de réduire l'intervalle laissé entre la chambre annulaire et la tôle déflectrice.

7. Vaporisateur-régulateur selon la Revendication 5, caractérisé par le fait que la tôle déflectrice (77) et la chambre annulaire (74) sont rendues solidaires entre elles par des goujons filetés (78) qui permettent de modifier si nécessaire la distance entre ces pièces.

8. Vaporisateur-régulateur selon la Revendication 5, caractérisé par le fait que la tôle déflectrice (77) est pourvue d'une saillie déflectrice (80) qui s'étend à l'intérieur de l'espace qui entoure la chambre annulaire (74) ainsi que d'un alésage central (81) qui traverse ladite tôle déflectrice (77) et ladite saillie déflectrice (80).

9. Vaporisateur-régulateur selon la Revendication 1, caractérisé par le fait que le mélangeur de gaz comporte une chambre annulaire (83) à section transversale triangulaire, pourvue d'une fente de trop-plein (87) orientée vers l'intérieur, la pointe du triangle étant tournée vers l'intérieur de la chambre annulaire, laquelle présente des orifices de raccordement orientés vers l'extérieur et destinés à des conduites de liaison (31, 38) reliées à la chambre (5) du boîtier qui contient le second étage réducteur de pression, et qu'à une certaine distance de la chambre annulaire (83) un corps rotatif tronconique (86) est prévu dans l'espace interne entouré par ladite chambre annulaire (83), ce corps rotatif (86) pouvant coulisser longitudinalement pour permettre de modifier la section de passage de cet espace interne.

10. Vaporisateur-régulateur selon l'une quelconque des Revendications 1 à 9, caractérisé par le fait qu'il est prévu sur le boîtier (1) de l'appareil une chambre à membrane (51) dont la membrane (52) est reliée à un organe obturateur (54), de forme tronconique, d'une soupape logée dans un orifice de passage (55) de la chambre (5) du boîtier qui constitue le second étage réducteur de pression, de façon que l'extrémité de plus petit diamètre dudit organe obturateur (54) puisse porter contre l'extrémité (39) de la tige coulissante (27) du second étage réducteur de pression, tandis que l'espace (56) divisé par la membrane (51) est relié d'une part à travers une conduite (59) sous pression dynamique à une chambre collectrice sous pression dynamique d'une tuyère de mesure (88) et d'autre part à travers une conduite d'arrivée (61) à une chambre à dépression (91) de ladite tuyère de mesure (88).

11. Vaporisateur-régulateur selon la Revendication 10, caractérisé par le fait que la partie de la chambre à membrane (51) reliée à la conduite sous pression dynamique (59) est reliée par l'intermédiaire d'une conduite en dérivation à dépression (57) à la chambre de membrane (41) qui commande la soupape d'obturation de l'orifice de passage (33) de la cloison (19).

12. Vaporisateur-régulateur selon la Revendication 10, caractérisé par le fait qu'il est prévu dans la conduite sous pression dynamique (59) une vis de réglage (60) ainsi qu'une électrovanne (93).

13. Vaporisateur-régulateur selon la Revendication 1, associé à un système à injection, caractérisé par le fait qu'entre la chambre (5) du boîtier qui constitue le second étage réducteur de pression et le dispositif d'injection du moteur il est prévu une tuyère mélangeuse (63) associée à un cône de réglage (65) coulissant dans un corps en forme de manchon (64), et qu'un tube collecteur (67a) disposé en aval du dispositif prémélangeur et situé côté moteur est relié à une prise d'air du carburateur (17) au-dessous du papillon d'étranglement de celui-ci.

Fig 1

Fig. 2

Fig. 3

0 105 959

- 3/4

0 105 959

4/9

Fig. 4

Fig. 5

5/9

0 105 959

– 6/4

Fig.6

Fig.7

0 105 959

- 8/9

Fig. 8

Fig.9